(19) Europäisches Patentamt
European Patent Office
Office européen des brevets

(11) **EP 1 921 442 A1**

(12) **DEMANDE DE BREVET EUROPEEN**

(43) Date de publication:
**14.05.2008 Bulletin 2008/20**

(51) Int Cl.:
*G01N 21/88* (2006.01)      *G01B 11/25* (2006.01)

(21) Numéro de dépôt: **07301450.8**

(22) Date de dépôt: **10.10.2007**

(84) Etats contractants désignés:
**AT BE BG CH CY CZ DE DK EE ES FI FR GB GR HU IE IS IT LI LT LU LV MC MT NL PL PT RO SE SI SK TR**
Etats d'extension désignés:
**AL BA HR MK RS**

(30) Priorité: **10.11.2006 FR 0609848**

(71) Demandeur: **Peugeot Citroen Automobiles SA 78943 Vélizy-Villacoublay Cedex (FR)**

(72) Inventeur: **Auger, Patrice 78650 Beynes (FR)**

(54) **Procédé et installation de contrôle de la qualité de pieces**

(57)      Procédé de contrôle de la qualité d'une pièce (2) comportant au moins une paroi (21) à contrôler comprenant, pour chaque section (σ) de la paroi (21), des étapes dans lesquelles :
- on projette une ligne de lumière (L) selon la section (σ) de la paroi (21) ;
- on mesure la position $((x_j ; z_j)_{1 \leq j \leq n})$ de n points de la ligne de lumière (L) de manière à obtenir un signal représentatif du profil de la section (σ) ;
- on détermine deux ajustements polynomiaux d'ordres différents du signal ;
- on calcule la surface définie entre les deux courbes d'ajustement polynomial ;
- on compare cette surface à un seuil prédéterminé de détection de défauts ;
- si la surface est supérieure au seuil de détection de défauts, on indique la présence d'un défaut (25) sur la section (σ).

Fig.5

**Description**

La présente invention a trait à un procédé de contrôle de la qualité d'une pièce. L'invention a également trait à une installation de contrôle de la qualité de pièces, comprenant au moins une source de lumière, au moins un capteur et une unité de calcul reliée à ce capteur.

Dans le domaine automobile, il est nécessaire de contrôler la qualité et l'intégrité de pièces embouties de véhicules, préalablement à leur montage sur un véhicule. En effet, des défauts peuvent apparaître sur ces pièces lors de leur mise en forme par emboutissage, ces défauts étant susceptibles d'influer sur la fonctionnalité et la durée de vie de ces pièces. La détection de défauts sur ces pièces dès la sortie des lignes d'emboutissage est un enjeu majeur afin de limiter la reproductibilité des défauts d'une pièce à une autre et le nombre de pièces à mettre au rebut. La mise en place d'un contrôle automatique de la qualité des pièces en sortie de ligne d'emboutissage permet d'améliorer la maîtrise des procédés de production de ces pièces et de limiter leur coût de fabrication.

Il est connu de contrôler la qualité d'une pièce par une méthode optique, en éclairant la surface de cette pièce et en capturant des images de la surface éclairée à l'aide d'une caméra. Cependant, les techniques actuelles ne permettent pas de détecter l'ensemble des défauts d'une pièce en sortie de ligne d'emboutissage. En particulier, il n'est pas possible de détecter à la fois des défauts débouchants, tels que par exemple des trous de soudure laser résultant du raboutage de pièces, et des défauts non débouchants, tels que des allongements de matière excessifs. De plus, la diversité des pièces utilisées dans le domaine automobile, en terme de géométrie ou de nuance notamment, nécessite une technique de contrôle qualité transposable à tout type de pièces, ce qui n'est pas le cas des techniques classiques de contrôle qualité.

C'est à ces inconvénients qu'entend plus particulièrement remédier l'invention en proposant un procédé et une installation de contrôle de la qualité de pièces qui permettent la détection à la fois de défauts débouchants et non débouchants et qui sont adaptables à tout type de pièces.

A cet effet, l'invention a pour objet un procédé de contrôle de la qualité d'une pièce, cette pièce comportant au moins une paroi à contrôler, caractérisé en ce qu'il comprend, pour chaque section de la paroi à contrôler, des étapes dans lesquelles :

- on projette une ligne de lumière selon la section de la paroi à contrôler ;
- on mesure la position de points de la ligne de lumière de manière à obtenir un signal représentatif du profil de la section ;
- on détermine un ajustement polynomial d'ordre $k \in \mathbb{N}^*$ du signal et un ajustement polynomial d'ordre $1 \in \mathbb{N}^*$ , 1 > k, du signal ;
- on calcule la surface définie entre les courbes d'ajustement polynomial d'ordres k et 1 ;
- on compare la surface à un seuil prédéterminé de détection de défauts ;
- si la surface est supérieure au seuil de détection de défauts, on indique la présence d'un défaut sur la section.

Selon d'autres caractéristiques avantageuses d'un procédé de contrôle conforme à l'invention :

- Les ajustements polynomiaux sont respectivement d'ordre k = 2 et 1 = 4.
- Préalablement à la détermination des ajustements polynomiaux d'ordres k et 1 du signal, il comprend des étapes supplémentaires dans lesquelles :

- on détermine un ajustement polynomial d'ordre $m \in \mathbb{N}^*$ du signal ;
- on calcule l'écart-type du signal ;
- on réalise un filtrage du signal en éliminant les parties du signal qui ne sont pas comprises dans une bande centrée sur la courbe d'ajustement polynomial d'ordre $m \in \mathbb{N}^*$ du signal et de largeur proportionnelle à l'écart-type du signal et à un facteur expérimental de qualité de mesure.
- Préalablement à la détermination des ajustements polynomiaux d'ordres k et 1 du signal, il comprend des étapes supplémentaires dans lesquelles :

- on découpe le signal en segments de signal associés chacun à un intervalle de points de la section ;
- pour chaque segment de signal, on détermine un segment de signal normalisé obtenu par ajustement du signal dans une gamme prédéterminée.
- Pour chaque segment de signal, le segment de signal normalisé correspondant est obtenu par ajustement du segment de signal entre 0 et 1 et le seuil de détection de défauts est réglé à 1.
- Il comprend des étapes supplémentaires dans lesquelles:

- pour chaque segment de signal normalisé, on détermine l'erreur quadratique d'ordre k associée à l'ajustement polynomial d'ordre k du signal et l'erreur quadratique d'ordre 1 associée à l'ajustement polynomial d'ordre 1 du signal ;
- pour chaque segment de signal normalisé, on calcule la différence des erreurs quadratiques d'ordres k et 1 ;
- si la surface pour un segment de signal normalisé donné est supérieure au seuil de détection de défauts et la différence des erreurs quadratiques pour ce segment de signal normalisé donné est le maximum des différences des erreurs quadratiques, on indique la présence d'un défaut sur l'intervalle de points de la section correspondant à ce segment de signal normalisé donné.
- Il comprend des étapes supplémentaires dans lesquelles:

- pour chaque segment de signal normalisé pour lequel la surface est supérieure au seuil de détection de défauts et la différence des erreurs quadratiques est le maximum des différences des erreurs quadratiques, on calcule le produit $\pi_i$ de la surface et de la différence des erreurs quadratiques ;
- on sélectionne le segment de signal normalisé Sgnor(x) pour lequel le produit $\pi_g$ est le maximum des produits $(\pi_i)_{0 \leq i \leq N-1}$;
- on détermine un ajustement polynomial $SOk(x)$ d'ordre $k \in \mathbb{N}^*$ du segment de signal non normalisé Sg(x) correspondant à Sgnor(x) et un ajustement polynomial $SOl(x)$ d'ordre $l \in \mathbb{N}^*$, $1 > k$, de Sg(x) ;
- on calcule une grandeur Q(x) définie par la relatio $Q(x) = | SOk(x) - SOl(x)|$ et la moyenne de Q(x) ;
- on estime la hauteur maximale d'un défaut repéré sur la section comme étant le maximum de Q(x) supérieur à la moyenne de Q(x).
- Il comprend des étapes supplémentaires dans lesquelles :

- pour chaque segment de signal normalisé pour lequel la surface est supérieure au seuil de détection de défauts, on calcule une grandeur $|\int Di(x)dx$ qui est fonction de la différence suivante :$|\int Sinor(x)-POli(x))dx|$ ;
- on sélectionne le segment de signal Sg(x) pour lequel la grandeur $|\int Dg(x)dx|$ est maximale ;
- on positionne un défaut débouchant au niveau de l'intervalle de points de la section correspondant au segment de signal Sg(x).

L'invention a également pour objet un support d'enregistrement d'informations comportant des instructions pour la mise en oeuvre d'un procédé de contrôle tel que décrit ci-dessus, lorsque ces instructions sont exécutées par une unité de calcul électronique.

Enfin, l'invention a pour objet une installation de contrôle de la qualité de pièces, comprenant au moins une source de lumière, au moins un capteur et une unité de calcul électronique apte à recevoir des données de ce capteur, l'une au moins des sources de lumière étant équipée d'un dispositif optique apte à canaliser la lumière projetée sur la pièce en une ligne de lumière, cette installation comprenant un support d'enregistrement d'informations tel que décrit ci-dessus et l'unité de calcul électronique étant apte à exécuter les instructions précitées.

Les caractéristiques et avantages de l'invention apparaîtront dans la description qui va suivre d'un mode de réalisation d'un procédé et d'une installation selon l'invention, donnée uniquement à titre d'exemple et faite en se référant aux dessins annexés dans lesquels :

- la figure 1 est une vue de dessus d'une installation conforme à l'invention ;
- la figure 2 est une vue en perspective et à plus grande échelle du détail II de la figure 1 ;
- la figure 3 est une représentation schématique du détail III de la figure 2, lors d'une première phase de contrôle de la qualité d'une pièce ;
- la figure 4 est une représentation schématique analogue à la figure 3, lors d'une deuxième phase de contrôle de la qualité d'une pièce ;
- la figure 5 est une coupe partielle à plus grande échelle selon la ligne V-V de la figure 4 ;
- la figure 6 est un diagramme synoptique de l'algorithme utilisé pour la détection de défauts lors de la deuxième phase de contrôle de la qualité d'une pièce ;
- la figure 7 est une représentation schématique d'étapes de segmentation et de normalisation de l'algorithme de la figure 6 ;
- la figure 8 est une représentation schématique d'une étape de filtrage de l'algorithme de la figure 6 ;
- la figure 9 est un diagramme synoptique de l'algorithme utilisé pour la localisation de défauts lors de la deuxième phase de contrôle de la qualité d'une pièce ; et
- la figure 10 est un diagramme synoptique de l'algorithme utilisé pour la quantification de défauts lors de la deuxième phase de contrôle de la qualité d'une pièce.

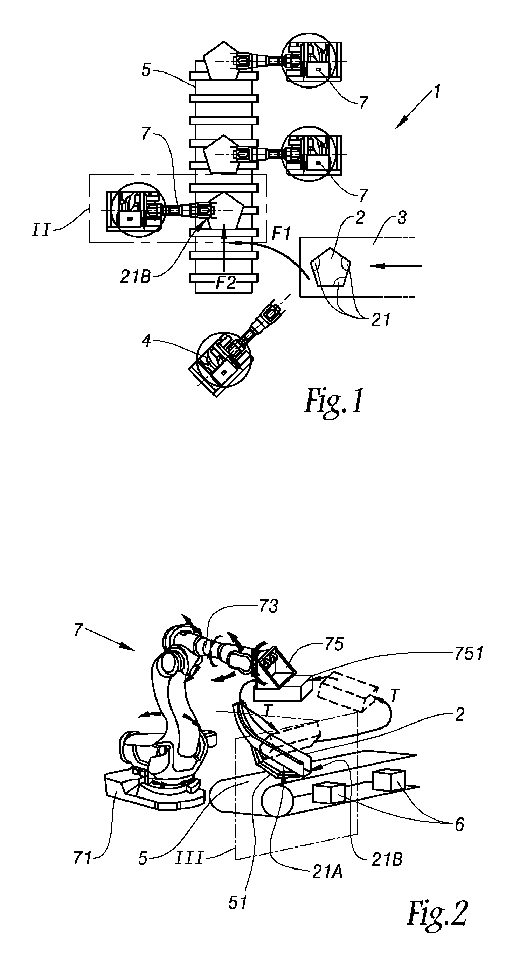

L'installation 1 représentée à la figure 1 est conçue pour contrôler la qualité de pièces embouties 2 destinées à être montées sur des véhicules automobiles. L'installation 1 est prévue directement en sortie de ligne d'emboutissage des pièces 2, les pièces 2 étant amenées dans l'installation 1 par un convoyeur 3 disposé en sortie de la presse d'emboutissage.

L'installation 1 comprend plusieurs robots 7 de contrôle des pièces 2, programmés chacun pour contrôler des parois 21 critiques des pièces 2 susceptibles de présenter des défauts. Ces parois 21 critiques des pièces 2 sont identifiées préalablement au contrôle qualité, par simulation numérique des opérations d'emboutissage sur les pièces 2.

Les pièces 2 sont déplacées d'un robot de contrôle 7 à un autre sur un convoyeur 5, prévu pour positionner chaque paroi 21 à contrôler d'une pièce 2 en regard d'un dispositif de contrôle du robot 7 correspondant. Le convoyeur 5 est équipé de supports 51 destinés à recevoir les pièces 2 et à assurer leur positionnement de manière reproductible. Le transfert des pièces 2 du convoyeur d'amenée 3 vers le convoyeur de contrôle 5 est assuré par un robot manipulateur 4 apte à saisir des pièces 2 sur le convoyeur 3 et à les positionner sur les supports 51 du convoyeur 5.

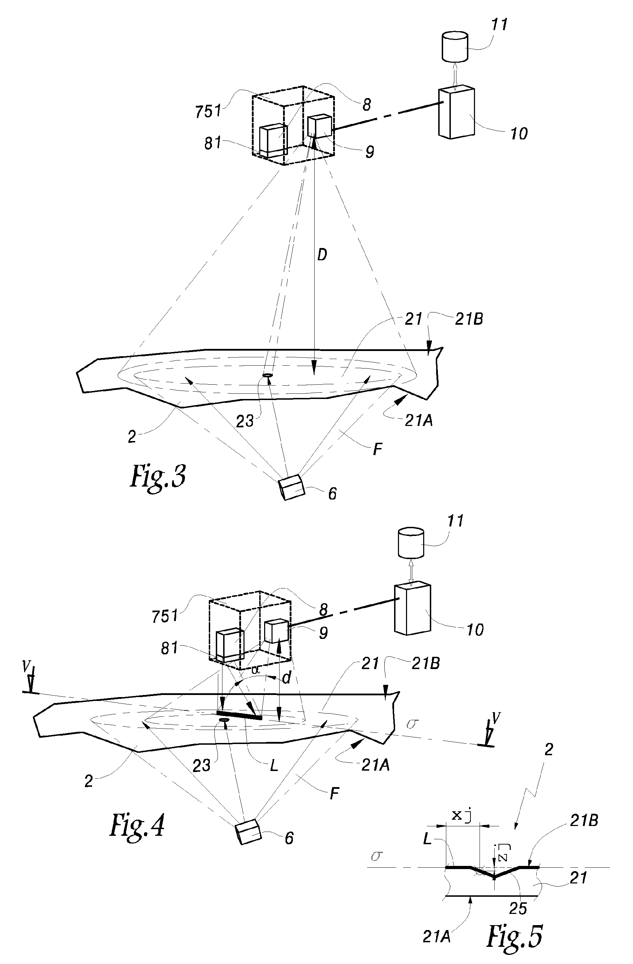

Comme visible aux figures 2 à 4, des sources lumineuses 6 sont situées au-dessous du convoyeur 5, à l'aplomb de chaque robot de contrôle 7. Le convoyeur 5 est prévu pour permettre la transmission d'un faisceau lumineux F provenant des sources 6, de manière à éclairer la face inférieure 21A de chaque paroi 21 à contrôler par le robot 7 correspondant. Le faisceau F émis par les sources 6 peut être de tout type approprié, en particulier un faisceau laser ou un faisceau de lumière blanche.

Chaque robot de contrôle 7 comprend un socle 71 sur lequel est monté à pivotement un bras 73 articulé. Le bras 73 est doté de six degrés de liberté permettant de garantir un positionnement précis et fiable d'une tête de contrôle 75 du robot 7, fixée sur le bras 73, par rapport aux parois 21 à contrôler par ce robot 7. Chaque robot 7 est programmé pour contrôler une ou plusieurs parois 21 critiques des pièces 2 en amenant un dispositif de contrôle 751 porté par la tête 75 successivement en regard des différentes parois 21 à contrôler. Ainsi, chaque robot 7 est programmé pour déplacer son dispositif de contrôle 751 selon une trajectoire prédéterminée, représentée par les flèches T à la figure 2.

Le dispositif de contrôle 751 comprend une caméra optique 9 et une source lumineuse 8 associée à un dispositif optique 81. La source lumineuse 8 émet tout type de lumière appropriée, en particulier un faisceau laser ou de la lumière blanche. Le dispositif optique 81 est prévu pour canaliser la lumière émise par la source lumineuse 8 en une ligne de lumière L. La source lumineuse 8 et la caméra 9 sont positionnées l'une par rapport à l'autre de telle sorte que la ligne de visée de la source 8 et la ligne de visée de la caméra 9 soient sécantes, comme montré à la figure 4. En particulier, l'angle $\alpha$ défini entre la ligne de visée de la source 8 et la ligne de visée de la caméra 9 est avantageusement compris entre environ 10° et 170°, de préférence entre environ 45° et 135°. La caméra 9 est reliée à une unité de calcul 10 de type électronique ou informatique, destinée à traiter les données captées par la caméra 9.

Un procédé de contrôle de la qualité d'une pièce 2 dans l'installation 1 comprend tout d'abord une étape dans laquelle on transfère tout d'abord la pièce 2 du convoyeur 3 d'amenée des pièces vers le convoyeur 5 de contrôle au moyen du robot 4, comme montré par la flèche $F_1$ de la figure 1. Le robot 4 place la pièce 2 à contrôler sur un support 51 du convoyeur 5.

La pièce 2 est ensuite déplacée par le convoyeur 5 jusqu'à une zone de contrôle d'un premier robot de contrôle 7, comme montré par la flèche $F_2$ de la figure 1. le convoyeur 5 immobilise alors la pièce 2 et le premier robot de contrôle 7 déplace son dispositif de contrôle 751 selon la trajectoire T prédéfinie, afin de contrôler chaque paroi 21 critique de la pièce 2 prise en charge par ce premier robot de contrôle 7.

Pour chaque paroi 21 à contrôler, un procédé de contrôle de cette paroi 21 comprend deux phases principales, un schéma de principe de chaque phase étant représenté aux figures 3 et 4.

Dans la première phase de contrôle représentée à la figure 3, la source lumineuse 8 est inactivée. La caméra 9 est utilisée avec un champ de vision large pour capturer des images de la face supérieure 21B de la paroi 21 et détecter ainsi la transmission éventuelle, du côté de la face supérieure 21B, de lumière provenant du faisceau F émis par les sources 6 disposées en regard de la face inférieure 21A. Cette première étape permet le repérage par rétro-éclairage de trous débouchants 23 éventuellement présents sur la paroi 21. Pour cette analyse à champ de vision large, la caméra 9 est positionnée à une distance D de l'ordre de 300 mm par rapport à la face supérieure 21B de la paroi 21 contrôlée.

Dans cette première phase de contrôle, le dispositif de contrôle 751 peut être fixe ou mobile par rapport à la paroi 21 contrôlée, selon que le champ de vision de la caméra 9 est suffisamment ou insuffisamment large pour couvrir la totalité de la surface de la face 21B. Les données captées par la caméra 9 sont traitées par l'unité de calcul 10. Il est ainsi possible non seulement de déterminer la position et la dimension de trous débouchants 23 présents sur la paroi 21, mais également, moyennant la mise en place de moyens de traitement adaptés, de qualifier l'aspect de ces défauts débouchants.

Dans la deuxième phase de contrôle représentée à la figure 4, la source lumineuse 8 est activée, de manière à projeter et à déplacer sur la face supérieure 21B de la paroi 21 une ligne de lumière L. La caméra 9 est alors utilisée avec un champ de vision réduit pour capturer des images de la paroi supérieure 21B. Dans cette deuxième phase de contrôle, la caméra 9 est prévue pour mesurer à la fois la position de la ligne de lumière L sur la face 21B et la transmission éventuelle du côté de cette face 21B de lumière provenant du faisceau F issu des sources inférieures 6. Pour cette analyse à champ de vision réduit, la caméra 9 est positionnée à une distance d de l'ordre de 60 mm par rapport à la face supérieure 21B de la paroi 21 contrôlée.

Dans cette deuxième phase de contrôle, le dispositif de contrôle 751 est mobile par rapport à la paroi 21 contrôlée, de façon à déplacer la ligne de lumière L et à capturer des images de cette ligne L sur toute la surface de la face supérieure 21B de la paroi 21 contrôlée, c'est-à-dire selon chaque section σ de cette paroi 21. Les données captées par la caméra 9 sont traitées par l'unité de calcul 10. Cette deuxième phase de contrôle permet ainsi de détecter à la fois des défauts débouchants 23 de la paroi 21 contrôlée, avec une résolution supérieure à celle de la première phase de contrôle, et des défauts non débouchants 25 présents sur la face supérieure 21B de la paroi 21 contrôlée.

Plus spécifiquement, cette deuxième phase de contrôle comprend, pour chaque section σ de la paroi 21 contrôlée, des étapes dans lesquelles:

Tout d'abord, on projette la ligne de lumière L sur la face supérieure 21B de la paroi 21, selon la section σ considérée. On mesure alors, à l'aide de la caméra 9, la position $(x_j ; z_j)_{1 \leq j \leq n}$ de n points de la ligne L, répartis le long de la section σ, où $x_j$ désigne l'abscisse d'un $j^{ème}$ point de mesure le long de la ligne L, et $z_j$ la hauteur de ce point selon une direction perpendiculaire au plan moyen de la face 21B. La donnée de ces points de mesure $(x_j ; z_j)_{1 \leq j \leq n}$ est transmise depuis la caméra 9 vers l'unité de calcul 10.

Le nombre n de points de mesure $(x_j ; z_j)$ nécessaires pour un diagnostic fiable de la qualité de chaque section σ d'une paroi 21 à contrôler est défini sur la base d'une analyse de risques. En particulier, l'analyse de risques permet de définir une hauteur maximale de défaut acceptable, n'entraînant pas de modification notable de la fonctionnalité et/ou de la durée de vie de la pièce 2. A titre d'exemple, une hauteur maximale de défaut acceptable peut être de l'ordre de 0,01 mm. La caméra 9 est alors adaptée pour relever un nombre n de points de mesure $(x_j ; z_j)$ permettant la détermination d'une hauteur de défaut à environ 0,001 mm près. Dans l'exemple précité, une valeur minimale du nombre n de points de mesure est n = 512, de préférence de l'ordre de n = 1024.

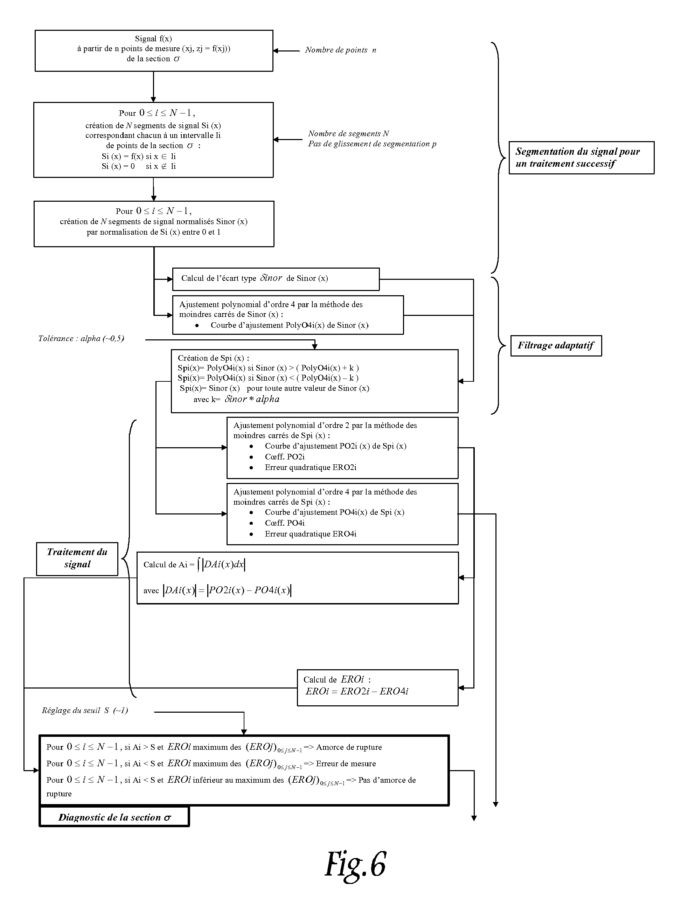

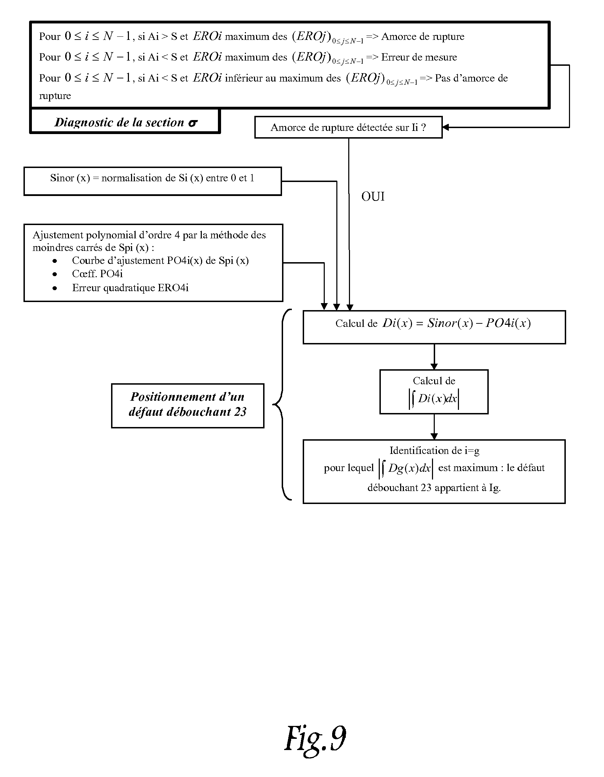

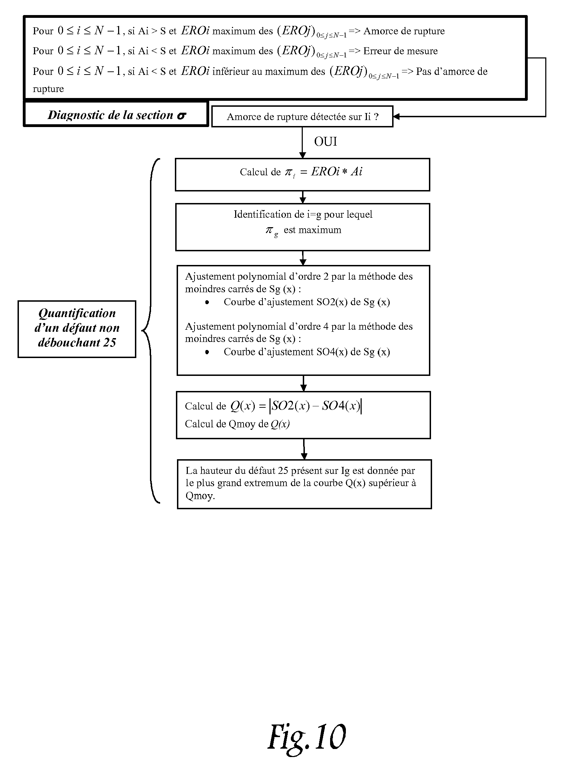

L'unité de calcul 10 est prévue pour analyser mathématiquement le profil de la section σ considérée de la paroi 21 à partir des n points de mesure $(x_j ; z_j)$ transmis par la caméra 9. L'unité de calcul 10 est apte à détecter la présence d'un défaut débouchant 23 ou non débouchant 25 sur la section σ, à positionner ce défaut sur la section σ et, dans le cas d'un défaut non débouchant 25, ou amorce de rupture, à déterminer la hauteur du défaut 25. A cet effet, l'unité de calcul 10 est programmée avec un algorithme de traitement des données de la caméra 9, dont un diagramme synoptique est montré aux figures 6, 9 et 10. Plus précisément, l'unité de calcul 10 est réalisée à partir d'un calculateur programmable conventionnel apte à exécuter des instructions enregistrées sur un support 11 d'enregistrement d'informations. Le support 11 comporte des instructions pour l'exécution de l'algorithme des figures 6, 9 et 10 lorsque les instructions sont exécutées par l'unité de calcul 10.

L'algorithme de traitement des données de la caméra 9 repose sur plusieurs hypothèses :

- La variation du profil de la section σ considérée est relativement faible.
- La position de défauts débouchants 23 ou non débouchants 25 éventuels de la section σ n'est pas connue. En particulier, un défaut 23 ou 25 peut être positionné dans un rayon d'emboutissage, une sortie de rayon ou une zone droite de la pièce 2.

L'algorithme utilisé par l'unité de calcul 10 comprend plusieurs stades successifs tels que décrits ci-après.

a) Création de segments de signal

A partir des n points de mesure $(x_j ; z_j)$ transmis par la caméra 9, on déduit un signal f(x) représentatif du profil de la section σ, tel que :

$$\text{Pour tout } 1 \leq j \leq n, \quad \text{f}(x_j) = z_j.$$

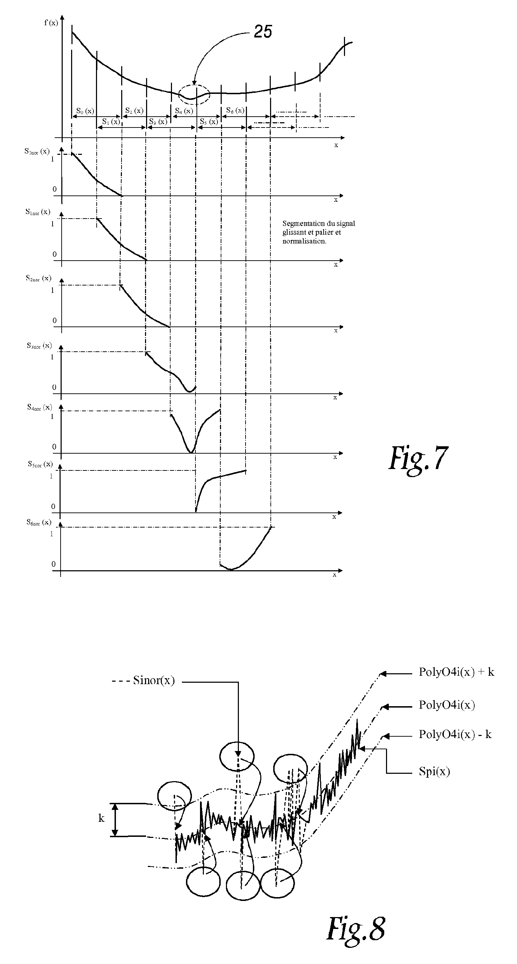

On découpe alors le signal f(x) en N segments de signal $(Si(x))_{0 \leq i \leq N-1}$, comme représenté à la figure 7, chaque segment de signal Si(x) étant associé à un intervalle $I_i$ de points de la section σ :

$$\text{Pour tout } 0 \leq i \leq N-1,$$

$$\text{Si(x) = f(x) si x} \in \text{I}_i$$

$$\text{Si(x) = 0} \qquad \text{si x} \notin \text{I}_i.$$

De manière avantageuse, les intervalles $(I_i)_{0 \leq i \leq N-1}$ sont prévus avec un recouvrement mutuel déterminé par un pas de glissement p, tel que montré dans l'exemple de la figure 7. Le nombre N de segments de signal Si(x) et le pas de glissement p entre deux intervalles $I_i$ consécutifs sont des données d'entrée de l'algorithme.

Ensuite, pour chaque segment de signal Si(x), on détermine un segment de signal normalisé Sinor(x), obtenu par ajustement du segment de signal Si(x) entre 0 et 1 :

$$\text{Pour tout } 0 \leq i \leq N-1,$$

Sinor(x) = Normalisation entre 0 et 1 de Si(x).

Cette normalisation permet de s'affranchir des différences de niveaux entre les différents segments de signal $(Si(x))_{0 \leq i \leq N-1}$ le long de la section σ . On traite ainsi chaque segment de signal Si(x) avec la même précision, et il est possible de fixer un seuil S unique de détection de défauts pour l'ensemble du profil de la section σ.

b) <u>Filtrage adaptatif</u>

On réalise ensuite un filtrage adaptatif de chaque segment de signal normalisé Sinor(x), qui tient compte de l'écart-type de chaque segment de signal normalisé et des incertitudes de mesure dues à la caméra 9.

Tout d'abord, on crée des données de référence :

- On calcule l'écart type δ*inor* de chaque segment de signal normalisé Sinor(x) ;
- On calcule un ajustement polynomial d'ordre 4 *Poly04i(x)* de chaque segment de signal normalisé Sinor(x) par la méthode des moindres carrés ;
- On détermine un facteur alpha représentatif de la qualité de mesure de la caméra 9 et ajustable expérimentalement. A titre d'exemple, on fixe *alpha* = 0,5 pour tenir compte des bruits de mesure de la caméra 9.

A partir de ces données de référence, on détermine un signal filtré Spi(x) pour chaque segment de signal normalisé Sinor(x), tel que:

$$\text{Pour tout } 0 \leq i \leq N-1,$$

$$\text{Spi(x) = } Poly04i(x) \text{ si Sinor (x) > } (Poly04i(x) + k)$$

$$\text{Spi(x) = } Poly04i(x) \text{ si Sinor (x) < } (Poly04i(x) - k)$$

$$\text{Spi(x) = Sinor(x) pour toute autre valeur de Sinor(x)}$$

avec

$$\text{k = } \delta inor * alpha .$$

Ce filtrage, dont un schéma de principe est représenté à la figure 8, permet de conserver un maximum d'information contenue dans chaque segment de signal normalisé Sinor(x), tout en tenant compte des incertitudes de mesure.

c) Traitement de chaque segment de signal filtré

Pour chaque segment de signal filtré Spi(x), on recherche deux ajustements polynomiaux d'ordres différents du signal. Par ajustement polynomial d'ordre $k \in \mathbb{N}^*$ du signal, on entend une fonction polynomiale d'ordre k qui reproduit au mieux les données expérimentales du signal, c'est-à-dire qui est au plus proche des points de mesure. La comparaison des deux courbes d'ajustement polynomial d'ordres différents permet l'identification d'un défaut éventuel sur l'intervalle $I_i$ de points de la section σ correspondant au segment de signal filtré Spi(x). En effet, si les deux courbes d'ajustement polynomial présentent des différences notables, cela signifie que l'ajustement polynomial d'ordre supérieur identifie des modifications de la forme du segment de signal filtré Spi(x) non diagnostiquées par l'ajustement polynomial d'ordre inférieur. Un défaut est alors présent sur l'intervalle $I_i$ de points de la section σ correspondant au segment de signal filtré Spi(x).

Par hypothèse, la variation du profil de la section σ est relativement faible, ce qui permet de limiter l'ajustement polynomial de chaque segment de signal filtré Spi(x) à l'ordre 2 pour décrire correctement l'évolution de ce segment de signal. En outre, on choisit de calculer l'ajustement polynomial d'ordre 4 de chaque segment de signal filtré Spi(x), de manière à pouvoir comparer l'évolution des courbes de ces deux ajustements. Les ajustements polynomiaux d'ordre 2 et d'ordre 4 de chaque segment de signal filtré Spi(x) servent ainsi de référence pour la détection de défauts sur l'intervalle $I_i$ associé et, par itération pour tout $0 \le i \le N-1$, permettent le diagnostic de la qualité de la section σ de la paroi 21 contrôlée.

Tout d'abord, pour chaque segment de signal filtré Spi(x), on crée des données de référence :

- On calcule l'ajustement polynomial d'ordre 2 *PO2i(x)* de Spi(x) par la méthode des moindres carrés et l'erreur quadratique d'ordre 2 *ERO2i* associée ;
- On calcule l'ajustement polynomial d'ordre 4 *PO4i(x)* de Spi(x) par la méthode des moindres carrés et l'erreur quadratique d'ordre 4 *ERO4i* associée.

A partir de ces données de référence, on calcule, pour chaque segment de signal filtré Spi(x) :

- la différence des erreurs quadratiques d'ordre 2 et 4 : *EROi = ER02i - ERO4i ;*
- la surface Ai définie entre les courbes d'ajustement polynomial d'ordres 2 et 4 :

$$\text{Ai} \;=\; \int \left| DAi(x) \right| \mathrm{dx}$$

avec

$$\left| DAi(x) \right| = \left| PO2i(x) - PO4i(x) \right|$$

La présence d'un défaut sur l'intervalle $I_i$ de points de la section σ correspondant au segment de signal filtré Spi(x) est déduite à partir des facteurs *EROi* et Ai. En particulier, on recherche les segments de signal filtrés Spi(x) pour lesquels le facteur *EROi* est maximum et on compare les surfaces Ai à un seuil S de détection de défauts. Chaque segment de signal filtré Spi(x) étant normalisé entre 0 et 1, la valeur du seuil S peut être fixée de manière unique à la valeur 1, pour tous les intervalles $(I_i)_{0 \le i \le N-1}$. Le diagnostic de la qualité de la section σ sur chaque intervalle $I_i$ est alors réalisé selon les critères suivants :

- si Ai est supérieure à S et *EROi* maximum des $(EROj)_{0 \le j \le N-1}$, alors une amorce de rupture est présente sur l'intervalle $I_i$ de points de la section σ ;
- si $A_i$ est inférieure à S et *EROi* maximum des $(EROj)_{0 \le j \le N-1}$, alors une erreur de mesure a été réalisée sur l'intervalle $I_i$ de points de la section σ ;
- si $A_i$ inférieur à S et *EROi* inférieur au maximum des $(EROj)_{0 \le j \le N-1}$, alors aucune amorce de rupture n'est présente sur l'intervalle $I_i$ de points de la section σ.

d) Repérage de la position d'un défaut débouchant 23

Pour chacun des segments de signal Si(x) identifiés comme possédant une amorce de rupture, on calcule la grandeur :

$$\left| \int Di(x)dx \right| \quad = \quad \left| \int (Sinor(x) - PO4i(x))dx \right|.$$

On positionne alors le défaut débouchant 23 sur l'intervalle Ig de points de la section σ correspondant au segment de signal Sg(x) pour lequel la grandeur $\left| \int Dg(x)dx \right|$ est maximale.

e) Calcul de la hauteur d'un défaut non débouchant 25

Pour chacun des segments de signal Si(x) identifiés comme possédant une amorce de rupture, on calcule le produit $\pi_i = EROI * A_i$ des facteurs *EROi* et $A_i$ utilisés pour le diagnostic, et on déduit le segment de signal Sg(x) pour lequel le produit $\pi_g$ est le maximum des $(\pi_i)_{0 \leq i \leq N-1}$.
On calcule alors un ajustement polynomial d'ordre 2 *S02 (x)* et un ajustement polynomial d'ordre 4 *SO4(x)* de Sg(x) et on évalue la grandeur :

$$Q(x) \quad = \quad \left| SO2(x) - SO4(x) \right|,$$

ainsi que la moyenne $Q_{moy}$ de Q(x). Les ajustements polynomiaux d'ordre 2 et 4 sont, dans cette étape, réalisés avant normalisation du segment de signal Sg(x) car l'objectif est de déterminer une hauteur réelle de défaut.
On estime la hauteur du défaut non débouchant 25 repéré dans l'intervalle Ig de points de la section σ comme étant le maximum de Q (x) supérieur à la valeur moyenne $Q_{moy}$ de Q(x).
Ainsi, l'unité de calcul 10 programmée avec l'algorithme de calcul décrit précédemment permet la détection de défauts débouchants 23 et non débouchants 25 sur chaque section σ de la paroi 21 contrôlée, à partir de mesures effectuées par la caméra 9, et la quantification des défauts non débouchants 25. Par déplacement de la ligne de lumière L sur toute la surface de la face supérieure 21B de la paroi 21 contrôlée et répétition des stades a) à e) de l'algorithme pour chaque section σ, il est donc possible de diagnostiquer de manière fiable la qualité de la paroi 21 dans son ensemble.
Selon une première variante de l'algorithme de calcul décrit précédemment, il est possible d'utiliser uniquement le critère de comparaison de la surface Ai par rapport au seuil S pour le diagnostic de la qualité de la section σ sur chaque intervalle $I_i$, sans recourir au critère de comparaison des différences des erreurs quadratiques *EROi*. Le critère de comparaison des *EROi* permet de valider la présence d'un défaut sur un intervalle $I_i$ considéré lorsque $A_i$ est supérieure à S, et de détecter une erreur de mesure éventuelle.
Par ailleurs, selon une deuxième variante de l'algorithme de calcul, l'étape de filtrage adaptatif de chaque segment de signal normalisé Sinor(x) peut être omise. Selon une troisième variante de l'algorithme de calcul, l'étape de normalisation de chaque segment de signal Si(x) peut être réalisée dans une gamme différente de [0, 1], le seuil S unique de détection de défauts étant alors différent de 1. En variante, cette étape de normalisation peut également être supprimée. Le seuil S de détection de défauts doit alors être adapté pour chaque segment de signal Si(x).
Enfin, selon une autre variante de l'algorithme de calcul, l'étape de segmentation du signal f(x) peut être supprimée.
Le dispositif de contrôle 751 équipant chaque robot 7 de l'installation 1 conforme à l'invention permet de contrôler une grande variété de défauts potentiellement présents sur les parois 21 à contrôler de la pièce 2. Grâce à la combinaison de la détection de défauts débouchants 23 et non débouchants 25, il est possible par exemple de vérifier l'état de surface de chaque paroi 21 critique de la pièce 2, et notamment la présence de rayures ou l'altération d'un revêtement, d'évaluer la géométrie et l'épaisseur de chaque paroi 21, et ainsi de contrôler des allongements de matière excessifs, de repérer des endommagements éventuels des bords de découpe, de mesurer des dimensions de trous débouchants de chaque paroi 21, ou encore de qualifier le type de nuance du matériau constitutif de chaque paroi 21.
Les parois 21 critiques de la pièce 2 sont contrôlées successivement par les robots de contrôle 7 de l'installation 1, par répétition des première et deuxième phases décrites ci-dessus. Lorsqu'un défaut débouchant 23 est détecté lors de la première phase de contrôle à champ de vision large, la pièce 2 est directement mise au rebut, sans recourir à l'analyse plus fine de la deuxième phase. Ainsi, le temps de cycle du contrôle est sensiblement réduit.
Le nombre élevé de degrés de liberté de chaque robot de contrôle 7 de l'installation 1 assure une grande flexibilité de l'installation de contrôle et son adaptabilité à tout type de pièces, quelles que soient leurs géométries et leurs dimensions. Un changement de pièce à contrôler est réalisé de manière simple, en redéfinissant la trajectoire T de contrôle à décrire par chaque robot de contrôle 7.

En outre, l'installation 1 conforme à l'invention est facilement intégrable dans l'industrie automobile, car elle ne nécessite pas de moyens spécifiques, en dehors du dispositif 751 de contrôle optique et de l'unité de calcul 10. L'installation 1 est adaptée aux cadences de production élevées, grâce à la flexibilité des robots de contrôle 7 et à la présence des convoyeurs 3 et 5 et du robot manipulateur 4.

Selon une variante non représentée de l'invention, le dispositif de contrôle 751 peut être disposé sur un pied fixe, alors que la pièce 2 à contrôler est déplacée en regard du dispositif de contrôle par un robot manipulateur. Selon une autre variante non représentée de l'invention, le dispositif de contrôle 751 peut également comprendre plusieurs caméras 9, dont certaines sont destinées à capter la lumière des sources inférieures 6, alors que d'autres sont destinées à mesurer la position de la ligne de lumière L émise par la source supérieure 8. Enfin, les capteurs utilisés pour mesurer la position de points de la ligne de lumière L peuvent être de tout type approprié, en particulier autre que des caméras optiques, tels que par exemple des capteurs CCD (Charge-Coupled Device) ou capteurs CMOS (Complementary Metal Oxide Semi-conductor).

## Revendications

1. Procédé de contrôle de la qualité d'une pièce (2), cette pièce comportant au moins une paroi (21) à contrôler, **caractérisé en ce qu'**il comprend, pour chaque section ($\sigma$) de la paroi (21) à contrôler, des étapes dans lesquelles :

   - on projette une ligne de lumière (L) selon la section ($\sigma$) de la paroi (21) à contrôler ;
   - on mesure la position $((x_j; Z_j)_{1 \leq j \leq n})$ de points de la ligne de lumière (L) de manière à obtenir un signal (f(x), Si (x)) représentatif du profil de la section ($\sigma$);
   - on détermine un ajustement polynomial *(POki(x))* d'ordre $k \in \mathbb{N}^*$ du signal et un ajustement polynomial *(POli (x))* d'ordre $1 \in \mathbb{N}^*$, 1 > k, du signal ;
   - on calcule la surface (Ai) définie entre les courbes d'ajustement polynomial *(POki(x), POli(x))* d'ordres k et 1 ;
   - on compare la surface (Ai) à un seuil (S) prédéterminé de détection de défauts (23, 25) ;
   - si la surface (Ai) est supérieure au seuil (S) de détection de défauts (23, 25), on indique la présence d'un défaut (23, 25) sur la section ($\sigma$).

2. Procédé de contrôle selon la revendication 1, **caractérisé en ce que** les ajustements polynomiaux sont respectivement d'ordre k = 2 et 1 = 4.

3. Procédé de contrôle selon l'une quelconque des revendications précédentes, **caractérisé en ce que**, préalablement à la détermination des ajustements polynomiaux d'ordres k et 1 du signal (Si(x)), il comprend des étapes supplémentaires dans lesquelles :

   - on détermine un ajustement polynomial (PolyOmi(x)) d'ordre $m \in \mathbb{N}^*$ du signal (Si(x));
   - on calcule l'écart-type ($\delta inor$) du signal (Si(x)) ;
   - on réalise un filtrage (Spi(x)) du signal (Si(x)) en éliminant les parties du signal qui ne sont pas comprises dans une bande centrée sur la courbe d'ajustement polynomial (PolyOmi(x)) d'ordre $m \in \mathbb{N}^*$ du signal et de largeur proportionnelle à l'écart-type ($\delta inor$) du signal et à un facteur expérimental (alpha) de qualité de mesure.

4. Procédé de contrôle selon l'une quelconque des revendications précédentes, **caractérisé en ce que**, préalablement à la détermination des ajustements polynomiaux d'ordres k et 1 du signal (f(x)), il comprend des étapes supplémentaires dans lesquelles:

   - on découpe le signal (f(x)) en segments de signal $((Si(x))_{0 \leq i \leq N-1})$ associés chacun à un intervalle $((I_i)_{0 \leq i \leq N-1})$ de points de la section ($\sigma$);
   - pour chaque segment de signal (Si(x)), on détermine un segment de signal normalisé (Sinor(x)) obtenu par ajustement du signal (Si(x)) dans une gamme prédéterminée ([0, 1]).

5. Procédé de contrôle selon la revendication 4, **caractérisé en ce que**, pour chaque segment de signal (Si(x)), le segment de signal normalisé (Sinor(x)) correspondant est obtenu par ajustement du segment de signal (Si(x)) entre 0 et 1 et **en ce que** le seuil (S) de détection de défauts (23, 25) est réglé à 1.

**6.** Procédé de contrôle selon l'une quelconque des revendications 4 ou 5, **caractérisé en ce qu'**il comprend des étapes supplémentaires dans lesquelles :

- pour chaque segment de signal normalisé (Sinor(x)), on détermine l'erreur quadratique *(EROki)* d'ordre k associée à l'ajustement polynomial (*POki(x)*) d'ordre k du signal et l'erreur quadratique *(EROli)* d'ordre 1 associée à l'ajustement polynomial (*POli(x)*) d'ordre 1 du signal ;
- pour chaque segment de signal normalisé (Sinor(x)), on calcule la différence *(EROi)* des erreurs quadratiques d'ordres k et 1 ;
- si la surface (Ai) pour un segment de signal normalisé (Sinor(x)) donné est supérieure au seuil (S) de détection de défauts (23, 25) et la différence *(EROi)* des erreurs quadratiques pour ce segment de signal normalisé (Sinor(x)) donné est le maximum des différences (($EROj$)$_{0 \leq j \leq N-1}$) des erreurs quadratiques, on indique la présence d'un défaut (23, 25) sur l'intervalle ($I_i$) de points de la section ($\sigma$) correspondant à ce segment de signal normalisé (Sinor(x)) donné.

**7.** Procédé de contrôle selon la revendication 6, **caractérisé en ce qu'**il comprend des étapes supplémentaires dans lesquelles :

- pour chaque segment de signal normalisé (Sinor(x)) pour lequel la surface (Ai) est supérieure au seuil (S) de détection de défauts (23, 25) et la différence *(EROi)* des erreurs quadratiques est le maximum des différences (($EROj$ $_{0 \leq j \leq N-1}$) des erreurs quadratiques, on calcule le produit $\pi_i$ de la surface (Ai) et de la différence (*EROi*) des erreurs quadratiques ;
- on sélectionne le segment de signal normalisé Sgnor(x) pour lequel le produit $\pi_g$ est le maximum des produits ($\pi_i$)$_{0 \leq i \leq N-1}$ ;
- on détermine un ajustement polynomial *SOk(x)* d'ordre $k \in \mathbb{N}^*$ du segment de signal non normalisé Sg(x) correspondant à Sgnor(x) et un ajustement polynomial *SOl(x)* d'ordre $l \in \mathbb{N}^*$, 1 > k, de Sg(x) ;
- on calcule une grandeur Q(x) définie par la relation Q(x) = |*SOk(x)-SOl(x)*| et la moyenne ($Q_{moy}$) de Q (x) ;
- on estime la hauteur maximale d'un défaut repéré sur la section ($\sigma$) comme étant le maximum de Q(x) supérieur à la moyenne ($Q_{moy}$) de Q(x) .

**8.** Procédé de contrôle selon l'une quelconque des revendications 4 à 7, **caractérisé en ce qu'**il comprend des étapes supplémentaires dans lesquelles :

- pour chaque segment de signal normalisé (Sinor(x)) pour lequel la surface (Ai) est supérieure au seuil (S) de détection de défauts (23, 25), on calcule une grandeur |$\int Di(x)dx$| qui est fonction de la différence suivante : |$\int$ (*Sinor(x)-Poli(x)*)dx| ;
- on sélectionne le segment de signal Sg(x) pour lequel la grandeur |$\int Dg(x)dx$| est maximale ;
- on positionne un défaut débouchant (23) au niveau de l'intervalle (Ig) de points de la section ($\sigma$) correspondant au segment de signal Sg(x).

**9.** Support (11) d'enregistrement d'informations, **caractérisé en ce qu'**il comporte des instructions pour la mise en oeuvre d'un procédé de contrôle selon l'une quelconque des revendications précédentes, lorsque ces instructions sont exécutées par une unité de calcul électronique (10).

**10.** Installation (1) de contrôle de la qualité de pièces (2), comprenant au moins une source de lumière (6, 8), au moins un capteur (9) et une unité de calcul électronique (10) apte à recevoir des données de ce capteur, l'une au moins des sources de lumière (8) étant équipée d'un dispositif optique (81) apte à canaliser la lumière projetée sur la pièce (2) en une ligne de lumière (L), **caractérisée en ce qu'**elle comprend un support (11) d'enregistrement d'informations selon la revendication 9 et **en ce que** l'unité de calcul (10) est apte à exécuter les instructions.

*Fig.1*

*Fig.2*

*Fig.3*

*Fig.4*

*Fig.5*

Signal f(x)
à partir de n points de mesure (xj, zj = f(xj))
de la section $\sigma$

*Nombre de points n*

Pour $0 \leq i \leq N-1$,
création de $N$ segments de signal Si (x)
correspondant chacun à un intervalle Ii
de points de la section $\sigma$ :
Si (x) = f(x) si x $\in$ Ii
Si (x) = 0    si x $\notin$ Ii

*Nombre de segments N*
*Pas de glissement de segmentation p*

***Segmentation du signal pour un traitement successif***

Pour $0 \leq i \leq N-1$,
création de $N$ segments de signal normalisés Sinor (x)
par normalisation de Si (x) entre 0 et 1

Calcul de l'écart type $\delta nor$ de Sinor (x)

Ajustement polynomial d'ordre 4 par la méthode des
moindres carrés de Sinor (x) :
- Courbe d'ajustement PolyO4i(x) de Sinor (x)

*Tolérance : alpha (~0,5)*

***Filtrage adaptatif***

Création de Spi (x) :
Spi(x)= PolyO4i(x) si Sinor (x) > ( PolyO4i(x) + k )
Spi(x)= PolyO4i(x) si Sinor (x) < ( PolyO4i(x) – k )
Spi(x)= Sinor (x)   pour toute autre valeur de Sinor (x)
avec k= $\delta nor * alpha$

Ajustement polynomial d'ordre 2 par la méthode des
moindres carrés de Spi (x) :
- Courbe d'ajustement PO2i (x) de Spi (x)
- Cœff. PO2i
- Erreur quadratique ERO2i

Ajustement polynomial d'ordre 4 par la méthode des
moindres carrés de Spi (x) :
- Courbe d'ajustement PO4i(x) de Spi (x)
- Cœff. PO4i
- Erreur quadratique ERO4i

***Traitement du signal***

Calcul de Ai $= \int \left| DAi(x)dx \right|$

avec $\left| DAi(x) \right| = \left| PO2i(x) - PO4i(x) \right|$

Calcul de $EROi$ :
$EROi = ERO2i - ERO4i$

*Réglage du seuil S (~1)*

Pour $0 \leq i \leq N-1$, si Ai > S et $EROi$ maximum des $(EROj)_{0 \leq j \leq N-1}$ => Amorce de rupture

Pour $0 \leq i \leq N-1$, si Ai < S et $EROi$ maximum des $(EROj)_{0 \leq j \leq N-1}$ => Erreur de mesure

Pour $0 \leq i \leq N-1$, si Ai < S et $EROi$ inférieur au maximum des $(EROj)_{0 \leq j \leq N-1}$ => Pas d'amorce de rupture

***Diagnostic de la section $\sigma$***

# Fig.6

Fig.7

Fig.8

EP 1 921 442 A1

Pour $0 \leq i \leq N-1$, si Ai > S et $EROi$ maximum des $(EROj)_{0 \leq j \leq N-1}$ => Amorce de rupture

Pour $0 \leq i \leq N-1$, si Ai < S et $EROi$ maximum des $(EROj)_{0 \leq j \leq N-1}$ => Erreur de mesure

Pour $0 \leq i \leq N-1$, si Ai < S et $EROi$ inférieur au maximum des $(EROj)_{0 \leq j \leq N-1}$ => Pas d'amorce de rupture

**Diagnostic de la section σ**

Amorce de rupture détectée sur Ii ?

Sinor (x) = normalisation de Si (x) entre 0 et 1

OUI

Ajustement polynomial d'ordre 4 par la méthode des moindres carrés de Spi (x) :
- Courbe d'ajustement PO4i(x) de Spi (x)
- Cœff. PO4i
- Erreur quadratique ERO4i

**Positionnement d'un défaut débouchant 23**

Calcul de $Di(x) = Sinor(x) - PO4i(x)$

Calcul de $\left| \int Di(x)dx \right|$

Identification de i=g

pour lequel $\left| \int Dg(x)dx \right|$ est maximum : le défaut débouchant 23 appartient à Ig.

*Fig.9*

15

Pour $0 \leq i \leq N - 1$, si Ai > S et $EROi$ maximum des $(EROj)_{0 \leq j \leq N-1}$ => Amorce de rupture

Pour $0 \leq i \leq N - 1$, si Ai < S et $EROi$ maximum des $(EROj)_{0 \leq j \leq N-1}$ => Erreur de mesure

Pour $0 \leq i \leq N - 1$, si Ai < S et $EROi$ inférieur au maximum des $(EROj)_{0 \leq j \leq N-1}$ => Pas d'amorce de rupture

**_Diagnostic de la section_ σ** | Amorce de rupture détectée sur Ii ?

OUI

Calcul de $\pi_i = EROi * Ai$

Identification de i=g pour lequel
$\pi_g$ est maximum

Ajustement polynomial d'ordre 2 par la méthode des moindres carrés de Sg (x) :
- Courbe d'ajustement SO2(x) de Sg (x)

Ajustement polynomial d'ordre 4 par la méthode des moindres carrés de Sg (x) :
- Courbe d'ajustement SO4(x) de Sg (x)

**_Quantification d'un défaut non débouchant 25_**

Calcul de $Q(x) = |SO2(x) - SO4(x)|$
Calcul de Qmoy de $Q(x)$

La hauteur du défaut 25 présent sur Ig est donnée par le plus grand extremum de la courbe Q(x) supérieur à Qmoy.

*Fig.10*

**Office européen**
**des brevets**

# RAPPORT DE RECHERCHE EUROPEENNE

Numéro de la demande

EP 07 30 1450

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | US 7 012 701 B2 (HASSLER ULF [DE] ET AL HASSLER ULF [DE] ET AL) 14 mars 2006 (2006-03-14) * colonne 1, ligne 17-21 * * colonne 2, ligne 37-41 * * colonne 6, ligne 18-22 * * colonne 15, ligne 23-25 * ----- | 1,9,10 | INV. G01N21/88 G01B11/25 |
| A | US 2006/070417 A1 (NIEMINEN JOHN [CA] ET AL) 6 avril 2006 (2006-04-06) * abrégé; figure 5 * * alinéa [0034] * ----- | 1,9,10 | |
| A | GB 2 364 119 A (NOTIONLIGHT LTD [GB]) 16 janvier 2002 (2002-01-16) * abrégé * * page 4, ligne 24 - page 5, ligne 20 * ----- | 1 | |
| A | EP 0 679 882 A (UNIMETALL SA [FR]) 2 novembre 1995 (1995-11-02) * abrégé; figure 1 * ----- | 1,9,10 | |
| A | EP 0 405 806 A2 (JAGUAR CARS [GB]) 2 janvier 1991 (1991-01-02) * revendications 1-5; figure 1 * ----- | 1,9,10 | DOMAINES TECHNIQUES RECHERCHES (IPC) G01N G01B |
| A | EP 1 400 802 A (FORD GLOBAL TECH INC [US]) 24 mars 2004 (2004-03-24) * abrégé; revendication 1 * * alinéa [0003] * ----- | 1,9,10 | |

Le présent rapport a été établi pour toutes les revendications

| Lieu de la recherche | Date d'achèvement de la recherche | Examinateur |
|---|---|---|
| Berlin | 26 février 2008 | Brison, Olivier |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

  .................................................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 07 30 1450

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

26-02-2008

| Document brevet cité au rapport de recherche | | Date de publication | Membre(s) de la famille de brevet(s) | | | Date de publication |
|---|---|---|---|---|---|---|
| US 7012701 | B2 | 14-03-2006 | AT | 294956 | T | 15-05-2005 |
| | | | AU | 2799202 | A | 24-06-2002 |
| | | | DE | 10062254 | A1 | 04-07-2002 |
| | | | WO | 0248648 | A1 | 20-06-2002 |
| | | | EP | 1332334 | A1 | 06-08-2003 |
| | | | US | 2005259859 | A1 | 24-11-2005 |
| US 2006070417 | A1 | 06-04-2006 | AUCUN | | | |
| GB 2364119 | A | 16-01-2002 | AUCUN | | | |
| EP 0679882 | A | 02-11-1995 | FR | 2719378 | A1 | 03-11-1995 |
| EP 0405806 | A2 | 02-01-1991 | DE | 69008623 | D1 | 09-06-1994 |
| | | | DE | 69008623 | T2 | 18-08-1994 |
| | | | JP | 2931640 | B2 | 09-08-1999 |
| | | | JP | 3042559 | A | 22-02-1991 |
| | | | US | 5086232 | A | 04-02-1992 |
| EP 1400802 | A | 24-03-2004 | US | 2004125986 | A1 | 01-07-2004 |

EPO FORM P0460

Pour tout renseignement concernant cette annexe : voir Journal Officiel de l'Office européen des brevets, No.12/82